# EUROPEAN PATENT APPLICATION

(11) **EP 4 732 956 A1**
(43) Date of publication of application: **29.04.2026**
(21) Application number: 25768577.6
(22) Date of filing: 06.03.2025
(51) Int. Cl.: B04C 3/04, B04C 9/00, B04B 5/10, B04B 11/06, B04B 15/08, B04B 7/02, H01M 4/04

(54) **ELECTRODE TAB SCRAP COLLECTING DEVICE AND ELECTRODE TAB SCRAP COLLECTING METHOD USING SAME**

(30) Priority: 06.03.2024 KR 20240032206
(71) Applicant: LG Energy Solution, Ltd., Seoul 07335 (KR)
(72) Inventor: KIM, Ik Joon, Daejeon 34122 (KR); PARK, Kyu Don, Daejeon 34122 (KR)
(74) Representative: Goddar, Heinz J.
(86) International application number: PCT/KR2025/099578
(87) International publication number: WO 2025/188158

(57) **Abstract**

An electrode tab scrap collection device related to one example of the present invention is a device for collecting scraps generated in a process of manufacturing electrode tabs, which comprises a negative pressure pump arranged to suck by generating a negative pressure, a separation part including a connection port connected to the negative pressure pump, an inflow port arranged so that the scraps are introduced from the outside, and a discharge port arranged so that the separated scraps are discharged, a suction pipe inserted into the connection port and arranged to be connected to the negative pressure pump for a fluid to be movable, an inlet pipe in communication with the inflow port, and a connecting hose inserted and connected into the inlet pipe and arranged with a passage through which external scraps are movable.

## Description

### Technical field

The present invention relates to an electrode tab scrap collection device and an electrode tab scrap collection method using the same, and more specifically, relates to a device capable of efficiently collecting and discharging electrode tab scraps generated in a process of cutting electrode tabs.

This application claims the benefit of priority based on Korean Patent Application No. 10-2024-0032206 dated March 6, 2024, the disclosure of which is incorporated herein by reference in its entirety.

### Background Art

Recently, rechargeable secondary batteries have been widely used as an energy source for wireless mobile devices. In addition, secondary batteries have also attracted attention as an energy source for electric transportation devices, hybrid electric transportation devices, and the like., which are proposed as a solution to air pollution from existing gasoline transportation devices, diesel transportation devices, and the like, using fossil fuels. Therefore, the types of applications that use secondary batteries are very diverse due to the advantages of secondary batteries, and it is expected that secondary batteries will be applied to more fields and products in the future.

Such a secondary battery comprises an electrode assembly in which electrodes and separators are alternately laminated, and a case accommodating the electrode assembly, where the electrode assembly has a structure in which multiple electrodes and multiple separators are alternately laminated.

Then, the secondary battery comprises an electrode manufacturing process for manufacturing electrodes, an electrode assembly assembling process for assembling an electrode assembly by laminating the manufactured electrodes and separators, and a process for manufacturing a secondary battery by accommodating the manufactured electrode assembly in a case.

Also, the secondary battery is composed of a positive electrode, a negative electrode, a separator, an electrolyte, and the like, and the positive electrode and the negative electrode are each connected to an external circuit through a metal component called an electrode tab. The electrode tab can be attached to the surface of the electrode using an adhesive, or can be formed by being formed integrally with the electrode. The electrode tab can be connected to an electrode lead protruding out of the secondary battery cell.

In addition, the manufacturing process of the electrode tab is as follows. First, the electrode is punched and cut using a slitter according to the specifications of the cell. At this time, the electrode tab can be formed at the edge portion of the electrode through punching, or a separate electrode tab can be attached. Furthermore, a separate cutter can be provided for processing the shape of the electrode tab.

Furthermore, defective scraps generated in this punching process and scraps remaining after cutting can cause environmental pollution and safety accidents. Therefore, it is necessary that the scraps are collected and discharged quickly and accurately.

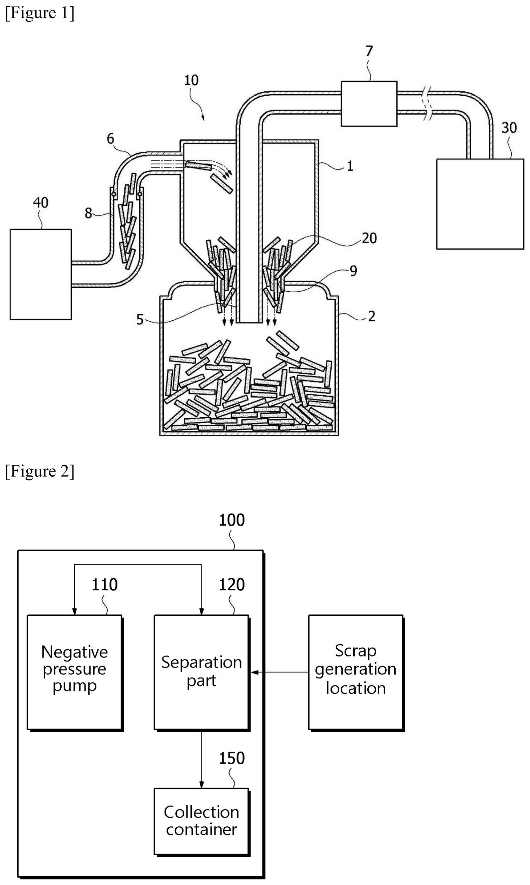

Figure 1 is a partial cross-sectional diagram schematically showing an inner appearance of a general scrap collection device (10).

Referring to Figure 1, a conventional electrode tab scrap collection device (10) is composed of a combination of a cyclone (1) and a collection container (2). The cyclone (1) is arranged so that scraps (20) are introduced from a scrap generation site (40) through an inlet pipe (6) by suction air of a negative pressure pump (7). The scraps (20) thus introduced can be rotated together with the suction air to separate the scraps (20) from the airflow by the difference between gravity and centrifugal force. The cyclone (1) can discharge the separated scraps (20) into the collection container (2) connected to the lower portion through a discharge port (9) while the scraps fall due to gravity. In addition, the electrode tab scrap collection device (10) is connected to a dust collector (30). Here, the dust collector (30) is a device for collecting dust in the sucked air. Such devices perform a role of collecting and discharging scraps (20), but have the following problems.

First, in the conventional art, a hose (8) connected to the scrap generation site was connected to surround the outer surface of the inlet pipe (6). For this reason, a step according to the pipe thickness was formed at the connection portion between the hose (8) and the inlet pipe (6), whereby there was a problem in the process of moving scraps. That is, the scraps were caught in this step structure, thereby getting stuck between the hose (8) and the inlet pipe (6), or getting stuck inside the inlet pipe (6), so that there was a phenomenon of clogging the pipe. Such a clogging phenomenon greatly reduced the efficiency of scrap collection, because a worker had to manually remove the clogged scraps.

Second, the scraps (20) got stuck the discharge passage between the cyclone (1) and the collection container (2), whereby there was a phenomenon of clogging the passage. This was because the suction pipe (5) inserted into the cyclone (1) was adjacent to the discharge port (9), or had a structure in which the end of the suction pipe (5) was inserted into the discharge port (9). Such a structure made it easy for scraps (20) to get stuck between the discharge port (9) and the suction pipe (5), whereby the phenomenon of clogging the discharge port (9) frequently occurred. Due to the clogging phenomenon of scraps (20), there is a problem in which scrap discharge to the collection container (2) is stopped.

To solve such problems of the conventional art, it is necessary to develop a technology capable of smoothly discharging electrode tab scraps by improving the tab scrap collection device.

### Disclosure

### Technical Problem

The present invention is intended to solve problems occurring in the process of discharging and collecting scraps generated upon conventional electrode manufacturing.

Through one example of the present invention, it is intended to provide an electrode tab scrap collection device and an electrode tab scrap collection method, in which a step structure causing interference with scraps is not formed at a connection portion between a connecting hose and an inlet pipe, so that scraps can smoothly be introduced into a separation part through the inlet pipe.

### Technical Solution

In order to achieve the above-described purpose, according to one example of the present invention, a device for collecting scraps generated in a process of manufacturing electrode tabs, wherein the electrode tab scrap collection device comprises a negative pressure pump arranged to suck by generating a negative pressure, a separation part including a connection port connected to the negative pressure pump, an inflow port arranged so that the scraps are introduced from the outside, and a discharge port arranged so that the separated scraps are discharged, a suction pipe inserted into the connection port and arranged to be connected to the negative pressure pump for a fluid to be movable, an inlet pipe in communication with the inflow port, and a connecting hose inserted and connected into the inlet pipe and arranged with a passage through which external scraps are movable, is provided.

2a-Also, the inlet pipe may have an inner diameter size equal to or larger than the outer diameter of the connecting hose. In such a structure, the connecting hose may be inserted into the inside of the inlet pipe.

3a-In addition, the inlet pipe is arranged to have an inner diameter larger than the length of the electrode tab scrap.

4a-Furthermore, the connecting hose may be arranged to have an inner diameter that gradually decreases in a direction approaching the inlet pipe. As one example, the end of the connecting hose may have a structure in which the inner diameter gradually decreases toward the terminal. The connecting hose may comprise a nozzle arranged so that an inner diameter gradually decreases in a direction approaching the inlet pipe, and the nozzle may be provided at the end of the connecting hose connected to the inlet pipe.

5a-In addition, the electrode tab scrap collection device may comprise a fixing member arranged to fix the connecting hose to the inlet pipe.

The fixing member may be arranged to pressurize and fix each outer surface of the end of the connecting hose and the end of the inlet pipe.

The fixing member may comprise a first cover arranged to cover each one side outer surface of the connecting hose and the inlet pipe and having an inner surface corresponding to each one side of the connecting hose and the inlet pipe, and a second cover arranged to be coupled with the first cover and arranged to cover each other side outer surface of the connecting hose and the inlet pipe, and having an inner surface corresponding to each other side of the connecting hose and the inlet pipe.

6a-Also, the suction pipe may have a suction port, through which air is sucked, spaced apart from the discharge port by a predetermined distance.

7a-In addition, the separation part may have a cylindrical body. Furthermore, the separation part may be arranged so that scraps rotationally moving by suction air of the suction pipe inside the cylindrical body collide with the inner surface of the cylindrical body and the scraps move to the discharge port by gravity. The separation part may suck and discharge scraps in a cyclone manner.

8a-Furthermore, the cylindrical body of the separation part may have a shape in which the diameter decreases downward.

9a-Also, the separation part may be provided with a cap part arranged to cover the upper portion of the cylindrical body.

9ab-In addition, the connection port may be formed in the center of the cap part, the inflow port may be formed in the side of the cylindrical body, and the discharge port may be formed in the lower portion of the cylindrical body.

10a-Also, the electrode tab scrap collection device may comprise a cover part connected to the lower portion of the separation part and connected to the discharge port, and a collection container arranged to be combinable to or detachable from the cover part.

11a-In addition, the electrode tab scrap collection device may comprise a mounting lever arranged so that the collection container is combined to the cover part or separated therefrom.

12a-Furthermore, the mounting lever may comprise a handle part having a bar shape elongated in both directions and a lever part having a bar shape elongated from each of both ends of the handle part toward the collection container. The handle part and the lever part may be connected to have a " 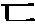 " shape.

13a-Also, the electrode tab scrap collection device may comprise a frame provided to fix the separation part and a mounting guide member coupled to the frame and provided with a latch groove portion.

13ab-In addition, each of both sides of the collection container may be provided with a hanging protrusion protruding in an outside direction and arranged to be inserted into the latch groove portion.

14a-Furthermore, on the lever part, a hanging groove arranged so that the hanging protrusion is inserted therein may be formed. Specifically, in the lever part, one end may be connected to the handle part, and the hanging groove arranged so that the hanging protrusion is inserted therein may be formed on the other end.

15a-In addition, the handle part may be arranged so that when moved downward, the lever part pushes up the hanging protrusion inserted into the hanging groove to insert it into the latch groove portion.

The lever part may be provided with a guide protrusion having a shape protruding in an outside direction at the end.

The mounting guide member may be provided with a support having a shape elongated in a horizontal direction so that the guide protrusion moves along the outer surface.

To achieve the above-described purpose, according to one example of the present invention, it provides a method of collecting electrode tab scraps generated in a process of manufacturing secondary batteries using a scrap collection device comprising a negative pressure pump, a separation part having an inflow port formed therein, a suction pipe, a connecting hose, an inlet pipe in communication with the inflow port, and a collection container.

In addition, the electrode tab scrap collection method may comprise a suction step in which air is sucked in through the suction pipe connected to the negative pressure pump by operating the negative pressure pump so that scraps are introduced inside the separation part from the outside and, an inflow step in which the scraps are introduced into the separation part through a connecting hose arranged with a moving passage movable from a scrap generation site and an inlet pipe into which an end of the connecting hose is inserted, and a separation step in which internal air is introduced into the suction pipe by the air suction of the negative pressure pump and the electrode tab scraps introduced from the outside are discharged into the collection container through a discharge port of the separation part.-

The inlet pipe may have an inner diameter size equal to or larger than the outer diameter of the connecting hose.

The inlet pipe may have an inner diameter larger than the length of the electrode tab scrap.

### Advantageous Effects

As discussed above, the electrode tab scrap collection device and collection method related to one example of the present invention have the following effects.

By comprising the inlet pipe in which the end of the connecting hose is inserted into the pipe, it is possible to solve the problems of the conventional art. That is, the electrode tab scrap collection device of the present invention does not form a step structure causing interference with scraps at the connection portion between the connecting hose and the inlet pipe of the conventional technology, so that scraps can smoothly be introduced into the separation part through the inlet pipe.

### Description of Drawings

Figure 1 is a partial cross-sectional diagram schematically showing an inner appearance of a general scrap collection device.
Figure 2 is a conceptual diagram conceptually showing components of a scrap collection device according to one example of the present invention.
Figure 3 is a front view schematically showing an appearance of a scrap collection device according to one example of the present invention.
Figure 4 is a partial cross-sectional diagram schematically showing an internal appearance of a scrap collection device according to one example of the present invention.
Figure 5 is a side view schematically showing an appearance of a scrap collection device according to one example of the present invention.
Figure 6 is a partial cross-sectional diagram schematically showing a connection relationship between an inlet pipe and a connecting hose.
Figure 7 is a bottom view schematically showing an appearance of a fixing member of a scrap collection device according to one example of the present invention.
Figures 8 and 9 are partial schematic diagrams schematically showing appearances of some components of a scrap collection device according to one example of the present invention.
Figure 10 is a flowchart showing steps of a scrap collection method according to one example of the present invention.

### Mode for Invention

Hereinafter, an electrode tab scrap collection device and an electrode tab scrap collection method according to one example of the present invention will be described in detail with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

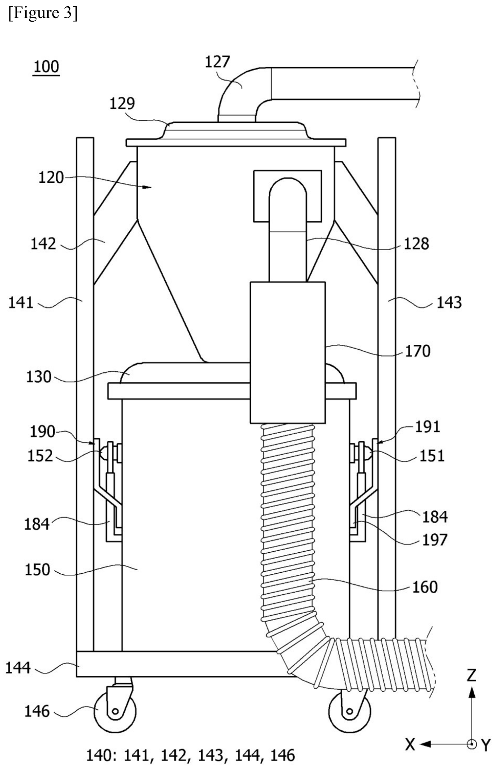

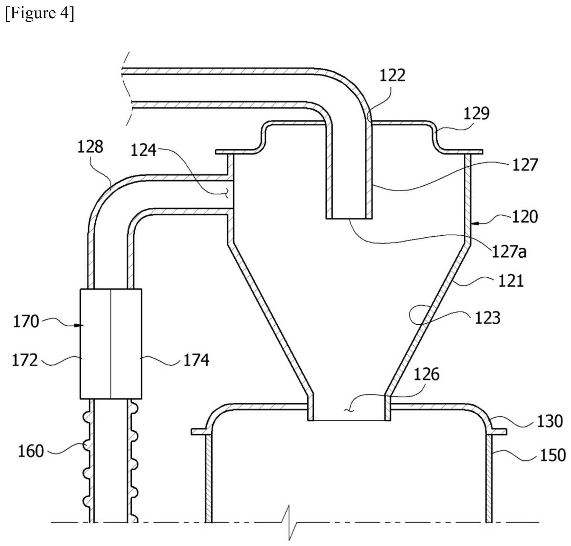

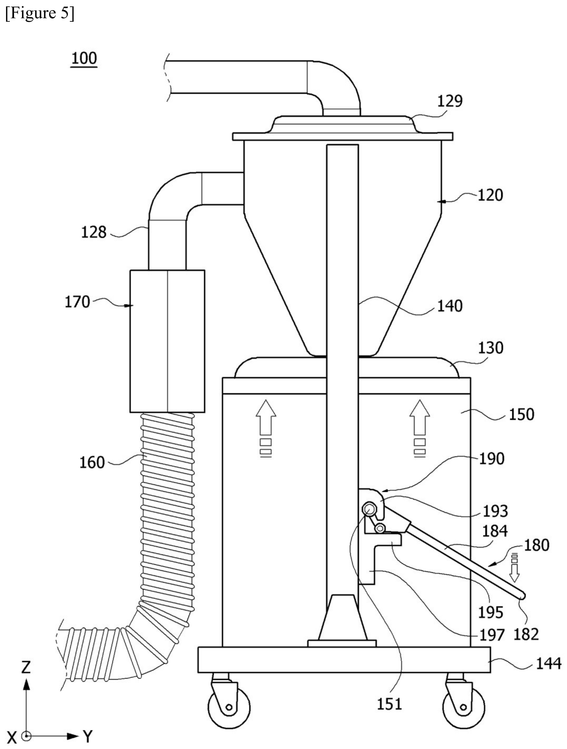

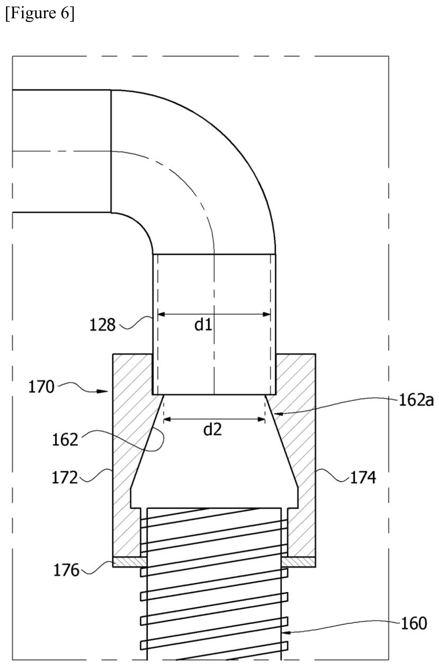

Figure 2 is a conceptual diagram conceptually showing components of a scrap collection device (100) according to one example of the present invention. Figure 3 is a front view schematically showing an appearance of a scrap collection device (100) according to one example of the present invention. Figure 4 is a partial cross-sectional diagram schematically showing an internal appearance of a scrap collection device (100) according to one example of the present invention. Figure 5 is a side view schematically showing an appearance of a scrap collection device (100) according to one example of the present invention. Then. Figure 6 is a partial cross-sectional diagram schematically showing a connection relationship between an inlet pipe (128) and a connecting hose (160).

Referring to Figures 2 to 6, an electrode tab scrap collection device (100) according to one example of the present invention may be a device for collecting scraps generated in a process of manufacturing electrode tabs.

The electrode tab scrap collection device (100) of the present invention may comprise a negative pressure pump (110). Here, the negative pressure pump (110) may be arranged to suck by generating a negative pressure. Specifically, the negative pressure pump (110) may suck and discharge air through a suction opening (not shown) and a discharge opening (not shown) installed inside the pump body.

Also, the electrode tab scrap collection device (100) of the present invention may comprise a separation part (120). The separation part (120) may be provided with a connection port (122) connected to the negative pressure pump (110). In addition, the separation part (120) may be provided with an inflow port (124) arranged so that electrode tab scraps are introduced from the outside. Furthermore, the separation part (120) may be provided with a discharge port (126) arranged so that the separated electrode tab scraps are discharged.

In addition, a method of separating the scraps introduced into the separation part (120) is not limited to a specific method, and for example, a method of separating scraps by gravity, a separation method using the principle of rotating at different speeds by inertial force, a separation method using magnetic force, and the like may be used.

Furthermore, the electrode tab scrap collection device (100) of the present invention may comprise a suction pipe (127). The suction pipe (127) may be arranged for a fluid to be movable. The suction pipe (127) may be connected to the negative pressure pump (110) and may be arranged to suck air from the suction port (127a). The suction pipe (127) may be inserted into the connection port (122).

In addition, the electrode tab scrap collection device (100) of the present invention may comprise a connecting hose (160). The connecting hose (160) may be arranged with a moving passage through which scraps are movable from a scrap generation site to an inlet pipe (128). Here, the scrap generation location means a location where electrode tab scraps to be discarded or recycled are generated while shaping electrodes or electrode tabs. At this time, the scraps may be moved from the location where the scraps are generated to the inlet pipe (128) by the negative pressure generated by the negative pressure pump (110). The connecting hose (160) may be provided with a durable and flexible material. For example, the connecting hose (160) may be formed of polyethylene (PE), polyurethane (PU), rubber, and the like.

In addition, the electrode tab scrap collection device (100) related to one example of the present invention may comprise an inlet pipe (128). The inlet pipe (128) may be connected to the separation part (120) to be in communication with the inflow port (124). A nozzle (162) for being inserted to the inside of the inlet pipe (128) may be provided in the connecting hose (160) at its end. Scraps may be introduced from the scrap generation site to the inlet pipe (128) through the connecting hose (160). The inlet pipe (128) has an inner diameter (d1) of the pipe that is equal to or larger than the inner diameter (d2) of the connecting hose (160).

Therefore, the electrode tab scrap collection device (100) of the present invention comprises an inlet pipe (128) communicated with the inflow port (124) and arranged so that an end of the connecting hose (160) is inserted into the inside of the pipe for scraps to be introduced through the connecting hose (160). In such a structure, unlike the conventional art, a step structure causing interference with scraps is not formed at the connection portion between the connecting hose (160) and the inlet pipe (128), so that scraps can smoothly flow into the separation part (120) through the inlet pipe (128). Accordingly, the electrode tab scrap collection device (100) of the present invention can prevent the scrap collection process from being interrupted because the clogging phenomenon occurring during movement to the inlet pipe (128) does not occur. As a result, the efficiency of the scrap collection process can be increased, and when the scrap collection process is interrupted due to the clogging phenomenon, a work that a worker removes the stuck scraps can be reduced, so that labor costs can be reduced.

Also, the inner diameter (d1) of the inlet pipe (128) may be larger than the length of the electrode tab scrap. Such an inlet pipe (128) can prevent scraps from being caught between the inner diameters of the pipe. For example, the inner diameter of the inlet pipe (128) may be larger than the length of the longest width portion of the electrode tab scrap.

In addition, as in Figure 6, the nozzle (162) of the connecting hose (160) may have a structure in which the inner diameter gradually decreases toward the terminal portion (162a). The structure in which the inner diameter decreases can minimize the phenomenon of scrap jamming or scrap clogging at the connection portion between the inlet pipe (128) and the connecting hose (160). The outer diameter of the nozzle (162) of the connecting hose (160) may be formed to be equal to or smaller than the inner diameter of the inlet pipe (128). That is, the present invention can minimize the phenomenon of scrap jamming or scrap clogging, as the step structure capable of causing interference with the scraps in the moving passage of the connection portion between the inlet pipe (128) and the connecting hose (160) is not formed.

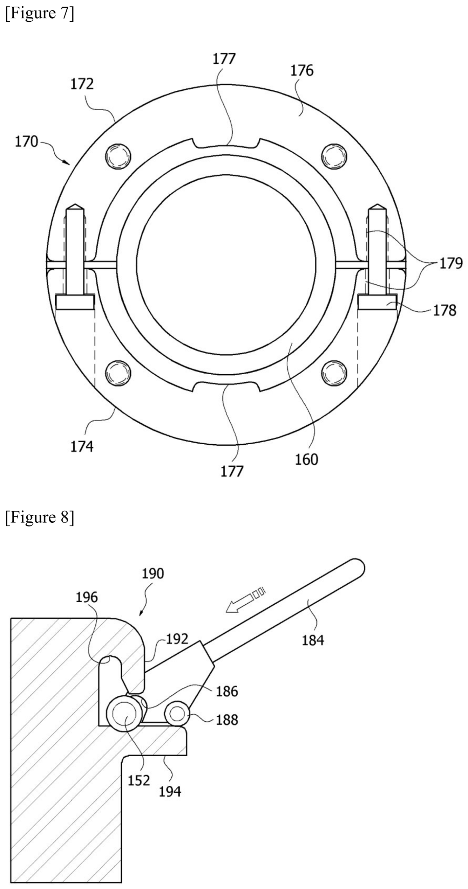

Figure 7 is a bottom view schematically showing an appearance of a fixing member of a scrap collection device according to one example of the present invention.

Referring to Figures 6 and 7, the electrode tab scrap collection device may comprise a fixing member (170) arranged to fix the connecting hose (160) to the inlet pipe (128). The fixing member (170) may be arranged to fix the end of the connecting hose (160) in a state where it is inserted into the inside of the inlet pipe (128).

In addition, the fixing member (170) may be arranged to pressurize and fix each outer surface of the end of the connecting hose (160) and the end of the inlet pipe (128). For example, the fixing member (170) may be a cylindrical bracket whose inner surface may surround the outer surfaces of the connecting hose (160) and the inlet pipe (128).

Specifically, the fixing member (170) may comprise a first cover (172) and a second cover (174). The first cover (172) may be arranged to cover each one lateral outer surface of the connecting hose (160) and the inlet pipe (128). As in Figure 6, the first cover (172) may have an inner surface corresponding to each one lateral of the connecting hose (160) and the inlet pipe (128). The second cover (174) may be arranged to cover each other lateral outer surface of the connecting hose (160) and the inlet pipe (128). As in Figure 6, the second cover (174) may have an inner surface corresponding to each other lateral of the connecting hose (160) and the inlet pipe (128). At this time, the first cover (172) and the second cover (174) may be bolt-joined in a combined state using a fastening bolt (178). To this end, a bolt hole (179) may be formed in each of the first cover (172) and the second cover (174).

Also, the fixing member (170) may be provided with a pressurization fixing member (176) at the bottom. The pressurization fixing member (176) may be arranged to pressurize and fix the connecting hose (160). For example, the pressurization fixing member (176) may have a ring shape. The pressurization fixing member (176) may be provided with a pressurization fixing protrusion (177) protruding toward the outer surface of the connecting hose (160) on each of both sides of the inner periphery of the ring shape. That is, the pressurization fixing member (176) may firmly fix the connecting hose (160) using the pressurization fixing protrusion (177).

In addition, the suction port (127a) through which air is sucked in the suction pipe (127) located inside the separation part (120) may be spaced apart from the discharge port (126) by a predetermined distance. For example, the degree of separation between the suction port (127a) and the discharge port (126) in the suction pipe (127) may be spaced apart by a distance in a range of 50% to 80% or so of the total height of the internal space of the separation part (120).

Therefore, the electrode tab scrap collection device (100) of the present invention comprises a suction pipe (127) arranged so that air is sucked by being connected to the negative pressure pump (110), inserted into the connection port (122), and having the terminal portion spaced apart from the discharge port (126) by a predetermined distance. In such a structure, it is possible to prevent scraps from being caught between the suction pipe (127) and the discharge port (126) to clog the discharge passage. Accordingly, the electrode tab scrap collection device (100) of the present invention can smoothly perform movement to the collection container (150), and increase the process efficiency without interrupting the scrap collection process, and reduce labor costs by reducing the work that the worker removes the caught scraps when the collection process is interrupted.

Also, the separation part (120) may use a separation method using centrifugal force. To this end, the separation part (120) may have a cylindrical body (121). The separation part (120) may allow for electrode tab scraps rotationally moving by suction air of the suction pipe (127) inside the cylindrical body (121) to collide with the inner surface (123) of the cylindrical body (121). Then, the separation part (120) may be arranged so that the scraps move to the discharge port (126) by gravity.

In addition, the cylindrical body (121) of the separation part (120) may have a shape in which the diameter gradually decreases in the downward direction. The cylindrical body (121) with such a shape is advantageous in inducing particles to descend to the bottom of the cylindrical body (121) by gravity while rotating along the inner wall of the cylinder by receiving centrifugal force.

Furthermore, the separation part (120) may be provided with a cap part (129) arranged to cover the upper portion of the cylindrical body (121). The cap part (129) may be coupled with the upper portion of the cylindrical body (121). A gasket (not shown) may be provided between the cap part (129) and the cylindrical body (121) for sealing.

Also, the connection port (122) of the separation part (120) may be formed in the center of the cap part (129). The inflow port (124) may be formed in the lateral of the cylindrical body (121). The discharge port (126) may be formed in the lower portion of the cylindrical body (121).

In addition, the electrode tab scrap collection device (100) of the present invention may comprise a collection container (150).

Furthermore, the electrode tab scrap collection device (100) of the present invention may comprise a cover part (130). The cover part (130) may be connected to the lower portion of the separation part (120). The cover part (130) may be connected to the discharge port (126). That is, the center of the cover part (130) may have an open shape connected to the discharge port (126). The cover part (130) may be arranged to cover the upper portion of the collection container (150). At this time, the cover part (130) may be provided with a gasket interposed at the joint portion of the cover part (130) and the collection container (150) so that the collection container (150) may be sealed.

The collection container (150) may be arranged to be combinable with or detachable from the cover part (130). The collection container (150) may have, for example, a cylindrical shape with an open top and a closed bottom.

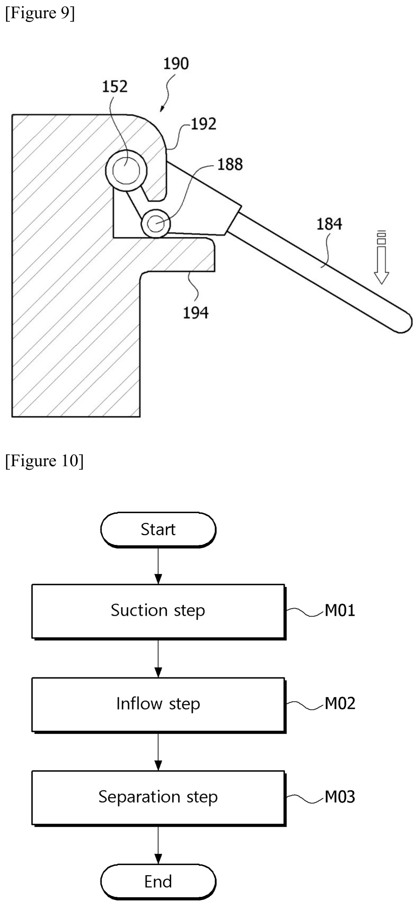

Figures 8 and 9 are partial schematic diagrams schematically showing appearances of some components of a scrap collection device (100) according to one example of the present invention.

Referring to Figures 3, 5, 8, and 9, the electrode tab scrap collection device (100) of the present invention may comprise a mounting lever (180) arranged so that the collection container (150) is coupled to or separated from the cover (130).

Also, the mounting lever (180) may comprise a handle part (182). The handle part (182) may have a bar shape elongated in both directions (X-axis direction). The mounting lever (180) may be arranged so that a worker can hold the handle part (182) by hand and move it up and down.

In addition, the mounting lever (180) may comprise a lever part (184). The lever part (184) may have a bar shape elongated from each of both ends of the handle part (182) toward the collection container (150). That is, the lever part (184) has a shape elongated in the Y-axis direction. For example, the downward direction, which is an extension direction of the suction pipe (127) in Figure 4, may be parallel to the Z-axis direction. For example, the insertion direction in which the inlet pipe (128) of Figure 5 is inserted into the inflow port (124) may be parallel to the Y-axis direction. Then, the X-axis direction of Figure 5 may be a direction perpendicular to the plane formed by the Z-axis and the Y-axis.

Furthermore, each of both sides of the collection container (150) in the X-axis direction may be provided with a hanging protrusion (152) protruding in an outside direction. The end of the hanging protrusion (152) in the protruding direction may be provided with a cylindrical head having a larger diameter than that of the extended body.

Also, the electrode tab scrap collection device (100) may comprise a frame (140) arranged to fix the separation part (120). The frame (140) may comprise a first column part (141) and a second column part (143). The frame (140) may be provided with a connection part (142) arranged to be connected to the separation part (120). A support part (144) may be formed at the lower portion of the frame (140). The support part (144) may be provided with a moving wheel (146) at the bottom. The collection device (100) is movable by the moving wheel (146).

In addition, the scrap collection device (100) may comprise a mounting guide member (190). For example, the mounting guide member (190) may be arranged to be bolt-joined to the frame (140) using a fastening bolt. For example, as in Figure 3, the mounting guide member (190) may be provided by being coupled to each of the first column part (141) and the second column part (143) of the frame (140). For example, as in Figure 8, the mounting guide member (190) may be provided with a latch groove portion (192). In the latch groove portion (192), an insertion groove (196) arranged so that the hanging protrusion (152) is inserted may be formed. The cylindrical head of the hanging protrusion (152) may be arranged to be inserted into the insertion groove (196).

Furthermore, in the lever part (184), one end may be connected to the handle part (182). In the lever part (184), a hanging groove (186) arranged so that the hanging protrusion (152) is inserted may be formed on the other end. In addition, as one example, when the handle part (182) is moved downward, the hanging protrusion (152) inserted into the hanging groove (186) of the lever part (184) may be inserted into the insertion groove (196) of the latch groove portion (192). That is, when the worker descends the handle part (182), the worker can lift the hanging protrusion (152) upward so that the hanging protrusion (152) inserted into the hanging groove (186) of the lever part (184) is inserted into the insertion groove (196) of the latch groove portion (192).

In such a structure, referring to Figure 5, when the handle part (182) is moved downward, the collection container (150) may rise toward the cover part (130), and the collection container (150) may be mounted on the cover part (130). Thereafter, when emptying the electrode scraps collected in the collection container (150), the handle part (182) may be moved upward. At this time, the collection container (150) may be separated from the cover part (130) and lowered, and the collection container (150) may be removed outside the device.

Also, as in Figure 8, the level part (184) may be provided with a guide protrusion (188). The level part (184) may be provided with a guide protrusion (188) having a shape protruding in an outside direction at the end. The guide protrusion (188) may be arranged to move along the outer surface of the support (194) according to the movement of the handle part (182). The guide protrusion (188) may be provided with a cylindrical head having a larger diameter than that of the extended body at the end in the protruding direction.

In addition, the mounting guide member (190) may be provided with a support (194) having a horizontally elongated shape so that the guide protrusion (188) moves along the outer surface. For example, the mounting guide member (190) may be provided with a support (194) protruding long in the opposite direction (Y-axis direction) to the direction where the level part (184) is inserted.

Figure 10 is a flowchart showing steps (M01, M02, M03) of a scrap collection method according to one example of the present invention.

Referring to Figures 2 to 4, and 10, an electrode tab scrap collection method according to one example of the present invention is a method of collecting electrode tab scraps generated in a process of manufacturing secondary batteries by using a scrap collection device (100) comprising a negative pressure pump (110), a suction pipe (127) equipped with an inflow port (124), a separation part (120), a connecting hose (160), an inlet pipe (128) connected to such an inflow port (124), and a collection container (150).

Also, the electrode tab scrap collection method may comprise a suction step (M01). Specifically, in the suction step (M01), air may be sucked through the suction pipe (127) connected to the negative pressure pump (110) by operating the negative pressure pump (110) so that scraps are introduced from the outside to the inside of the separation part (120).

In addition, the electrode tab scrap collection method may comprise an inflow step (M02). Specifically, the inflow step (M02) is a step in which scraps are introduced to the inside of the separation part (120) through a connecting hose (160) arranged with a moving passage in which scraps are movable from a scrap generation site, and an inlet pipe (128) into which an end of the connecting hose (160) is inserted.

Furthermore, the electrode tab scrap collection method may comprise a separation step (M03). Specifically, in the separation step (M03), the air introduced while moving by the air suction of the negative pressure pump (110) may be introduced into the suction pipe (127). In the suction step (M01), electrode tab scraps introduced from the outside may be discharged into the collection container (150) through the discharge port (126) of the separation part (120).

Therefore, the electrode tab scrap collection method of the present invention can solve the problem of the conventional art by comprising the inflow step (M02) in which the scraps are introduced into the separation part (120) through the inlet pipe (128) into which the end of the connecting hose (160) is inserted. That is, since a step structure causing interference with the scraps is not formed at the connection portion between the connecting hose (160) and the inlet pipe (128) in the conventional art, the scraps can smoothly be introduced into the separation part (120) along the inlet pipe (128). Accordingly, the electrode tab scrap collection method of the present invention can prevent the scrap collection process from being interrupted because the clogging phenomenon occurring during movement to the inlet pipe (128) does not occur. Accordingly, the collection process efficiency is increased, and the work that the worker removes the stuck scraps when the collection process is interrupted is reduced, whereby labor costs can be reduced.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to the electrode tab scrap collection device and collection method related to one example of the present invention, scraps can be smoothly introduced into the separation part through the inlet pipe.

## Claims

1. A device for collecting scraps generated in a process of manufacturing electrode tabs, wherein the electrode tab scrap collection device comprises:
a negative pressure pump arranged to suck by generating a negative pressure;
a separation part including a connection port connected to the negative pressure pump, an inflow port arranged so that the scraps are introduced from the outside, and a discharge port arranged so that the separated scraps are discharged;
a suction pipe inserted into the connection port and arranged to be connected to the negative pressure pump for a fluid to be movable;
an inlet pipe in communication with the inflow port; and
a connecting hose inserted and connected into the inlet pipe and arranged with a passage through which external scraps are movable.

2. The electrode tab scrap collection device according to claim 1, wherein
the inlet pipe has an inner diameter size equal to or larger than the outer diameter of the connecting hose. In such a structure, the connecting hose may be inserted into the inside of the inlet pipe.

3. The electrode tab scrap collection device according to claim 1, wherein
the inlet pipe has an inner diameter larger than the length of the electrode tab scrap.

4. The electrode tab scrap collection device according to claim 1, wherein
the connecting hose is arranged to have an inner diameter that gradually decreases in a direction approaching the inlet pipe.

5. The electrode tab scrap collection device according to claim 1, further comprising
a fixing member arranged to fix the connecting hose to the inlet pipe.

6. The electrode tab scrap collection device according to claim 1, wherein
the suction pipe has a suction port, through which air is sucked, spaced apart from the discharge port by a predetermined distance.

7. The electrode tab scrap collection device according to claim 1, wherein
the separation part has
a cylindrical body, and is arranged so that scraps rotationally moving by suction air of the suction pipe inside the cylindrical body collide with the inner surface of the cylindrical body and the scraps move to the discharge port by gravity.

8. The electrode tab scrap collection device according to claim 7, wherein
the cylindrical body of the separation part has a shape in which the diameter decreases downward.

9. The electrode tab scrap collection device according to claim 8, wherein
the separation part is provided with a cap part arranged to cover the upper portion of the cylindrical body,
the connection port is formed in the center of the cap part,
the inflow port is formed in the side of the cylindrical body, and
the discharge port is formed in the lower portion of the cylindrical body.

10. The electrode tab scrap collection device according to claim 1, further comprising:
a cover part connected to the lower portion of the separation part and connected to the discharge port; and
a collection container arranged to be combinable to or detachable from the cover part.

11. The electrode tab scrap collection device according to claim 10, further comprising
a mounting lever arranged so that the collection container is combined to the cover part or separated therefrom.

12. The electrode tab scrap collection device according to claim 11, wherein
the mounting lever comprises a handle part having a bar shape elongated in both directions; and
a lever part having a bar shape elongated from each of both ends of the handle part toward the collection container.

13. The electrode tab scrap collection device according to claim 12, further comprising
a frame provided to fix the separation part; and
a mounting guide member coupled to the frame and provided with a latch groove portion, wherein
each of both sides of the collection container is provided with a hanging protrusion protruding in an outside direction and arranged to be inserted into the latch groove portion.

14. The electrode tab scrap collection device according to claim 13, wherein
on the lever part, a hanging groove arranged so that the hanging protrusion is inserted therein is formed.

15. The electrode tab scrap collection device according to claim 14, wherein
the handle part is arranged so that when moved downward, the lever part pushes up the hanging protrusion inserted into the hanging groove to insert it into the latch groove portion.
